# EUROPEAN PATENT APPLICATION

(11) **EP 2 439 616 A1**
(43) Date of publication of application: **11.04.2012**
(21) Application number: 11184640.8
(22) Date of filing: 11.10.2011
(51) Int. Cl.: G06F 3/033, H01H 25/00

(54) **Multi-direction input device**

(30) Priority: 11.10.2010 KR 20100098741
(71) Applicant: Innochips Technology Co., Ltd., Gyeonggi-do 425-852 (KR)
(72) Inventor: Park, In-Kil, 446-788 Yongin-Si, Gyeonggi-Do (KR); Kim, Dae-Kyum, 405-740 Incheon (KR); Kim, Young Sul, 403-090 Incheon (KR)
(74) Representative: Michalski Hüttermann & Partner

(57) **Abstract**

Provided is a multi-direction input device. The multi-direction input device includes a manipulation member moved in a multi-direction by a user's manipulation, a spring ring disposed to surround at least one side of the manipulation member, the spring ring returning to an initial position of the manipulation member by elasticity, and a fixing member configured to fix at least one portion of the spring ring.

## Description

### CROSS-REFERENCE TO RELATED APPLICATION

This application claims priority to Korean Patent Application No. 10-2010-0098741 filed on October 11, 2010 and all the benefits accruing therefrom under 35 U.S.C. §119, the contents of which are incorporated by reference in their entirety.

### BACKGROUND

The present disclosure relates to an input device, and more particularly, to a multi-direction input device capable of being applied to various electronics including portable terminals.

In recent years, electronics is being multi-functioned and miniaturized more and more. For example, a mobile phone is being miniaturized while providing various services such as DMD reception, digital camera, data transmission/reception, MP3 player, internet communication, etc. A graphic user interface (GUI) using a point may be used to easily manipulate the electronics. Here, to control the movement of the point, a multi-direction input device in which various multi-inputs is allowable is required.

Recently, a multi-direction input device in which a variation of a magnetic field due to movement of a magnet is detected using a sensor to control the movement of the point on a screen. Here, the sensor is mounted on a board, and the magnet returns to its original position using a silicon rubber after the magnet is moved in a multi-direction. That is, the magnet is moved together with the silicon rubber by the user's manipulation. Thus, the sensor detects the movement of the sensor to display the movement of the point on the screen. Thereafter, when the user's manipulation is completed, the magnet may return to its original position by the elasticity of the silicon rubber.

However, the silicon rubber may be easily damaged due to friction with the board. Accordingly, the elasticity of the silicon rubber may be reduced, and thus, there is a limitation that the magnet does not quickly return to the original position.

### SUMMARY

The present disclosure provides a multi-direction input device in which a magnet quickly returns to its original position.

The present disclosure also provides a multi-direction input device in which a manipulation member is disposed to receive a portion of a magnet and a hinge part manufactured by winding an elastic metal, plastic, or rubber in a ring shape surrounds the manipulation member to allow the manipulation member to quickly return to its original position by an elastic restoring force of the hinge part after user's manipulation is completed.

The present disclosure also provides a multi-direction input device in which a fixing member for fixing a portion of a hinge part is disposed and a hinge part is disposed to surround a manipulation member and the fixing member to fix the other side of the hinge part when the manipulation member is moved in one direction.

In accordance with an exemplary embodiment, a multi-direction input device includes: a manipulation member moved in a multi-direction by a user's manipulation; a hinge part disposed to surround at least one side of the manipulation member, the hinge part returning to an initial position of the manipulation member by elasticity; and a fixing member configured to fix at least one portion of the hinge part.

The hinge part may be disposed to surround the outside of a lateral direction of the manipulation member and the outside of the fixing member at the same time. The fixing member may include a protrusion protruding upward from one area of the lower case of a case part including upper and lower cases which are coupled to each other to receive the hinge part and the manipulation member.

The hinge part may be disposed to surround the inside of a lower side of the manipulation member and the inside of the fixing member at the same time. The manipulation member may include: a flat plate part having a flat plate shape; and a hinge fixing part extending downward from the outside of the flat plate part. The fixing member may include a protrusion protruding upward from one area of the lower case or a stepped portion between one plane and the other plane which have thicknesses different from each other. The hinge part may be disposed to surround the inside of the hinge fixing part and the inside of the protrusion or the stepped portion at the same time.

The hinge part may be disposed to surround the outside of a lateral direction of the fixing member and the inside of the fixing member at the same time. The fixing member may include an inclined part inclined from a top surface of an upper case of a case part toward a lower side of a central portion or a protrusion disposed between the top surface and the central portion, wherein the case part may include the upper and lower cases which are coupled to each other to receive the hinge part and the manipulation member. The hinge part may be disposed to surround an inner surface of the inclined part and the outside of the manipulation member at the same time.

The hinge part may be manufactured by winding an elastic metal, plastic, or rubber in a ring shape. The hinge part may be manufactured in a ring shape so that one end and the other end thereof contact each other, are spaced a predetermined distance from each other, or partially overlap each other. The multi-direction input device may further include: a magnet part in which at least one portion thereof is received into the manipulation, the magnet being moved together with the manipulation member; and a sensor configured to detect a variation of a magnetic field of the movement of the magnet part. The manipulation member may include: a cap part configured to receive at least one portion of the magnet part; and a flat plate part disposed around the cap part, the flat plate part having a flat plate shape. The multi-direction input device may further include an actuator disposed under the magnet part.

### BRIEF DESCRIPTION OF THE DRAWINGS

Exemplary embodiments can be understood in more detail from the following description taken in conjunction with the accompanying drawings, in which:

FIG. 1 is a view illustrating an outer appearance of a multi-direction input device in accordance with an exemplary embodiment;

FIG. 2 is an exploded perspective view of a multi-direction input device in accordance with an exemplary embodiment;

FIG. 3 is a sectional view of a multi-direction input device in accordance with an exemplary embodiment;

FIG. 4 is a perspective view illustrating various shapes of a hinge part of a multi-direction input device in accordance with an exemplary embodiment;

FIG. 5 is a schematic view for explaining states of a hinge part and a button part depending on an operation of a multi-direction input device in accordance with an exemplary embodiment;

FIG. 6 is an exploded perspective view of a multi-direction input device in accordance with another exemplary embodiment;

FIG. 7 is a sectional view of a multi-direction input device in accordance with another exemplary embodiment;

FIG. 8 is a perspective view illustrating various shapes of a hinge part of a multi-direction input device in accordance with another exemplary embodiment;

FIG. 9 is a schematic view for explaining states of a hinge part and a button part depending on an operation of a multi-direction input device in accordance with another exemplary embodiment;

FIG. 10 is an exploded perspective view of a multi-direction input device in accordance with another exemplary embodiment; and

FIG. 11 is a sectional view of a multi-direction input device in accordance with another exemplary embodiment.

### DETAILED DESCRIPTION OF EMBODIMENTS

Hereinafter, specific embodiments will be described in detail with reference to the accompanying drawings. The present disclosure may, however, be embodied in different forms and should not be construed as limited to the embodiments set forth herein. Rather, these embodiments are provided so that this disclosure will be thorough and complete, and will fully convey the scope of the present disclosure to those skilled in the art. In the figures, like reference numerals refer to like elements throughout.

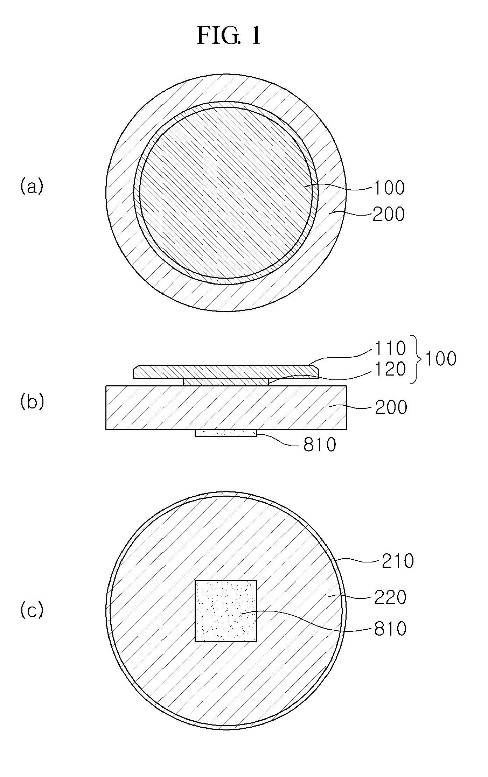

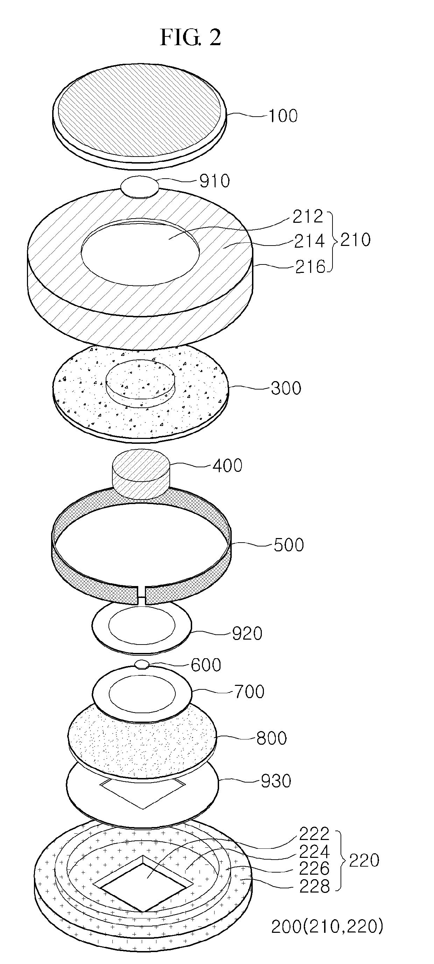

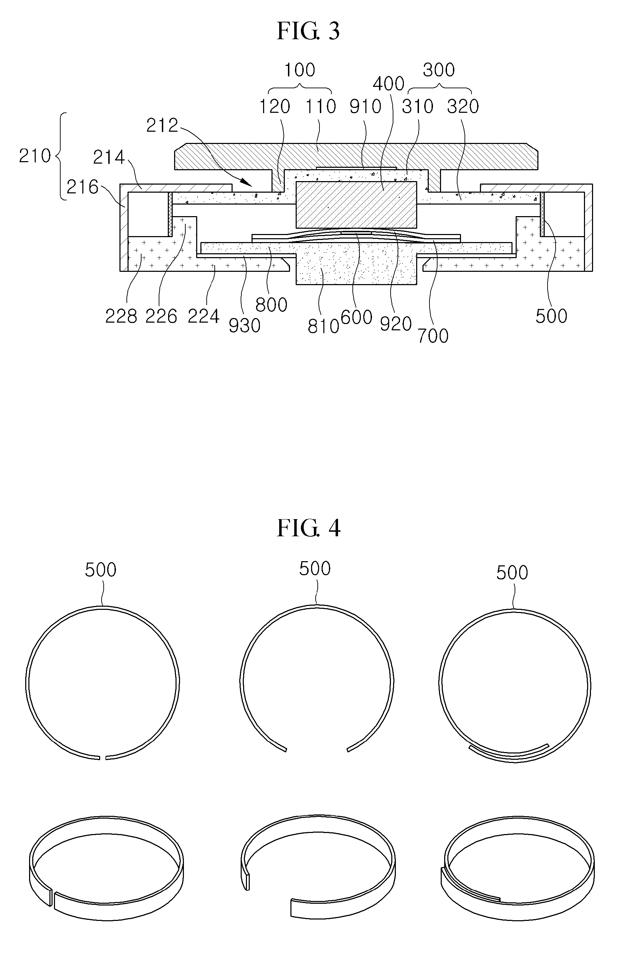

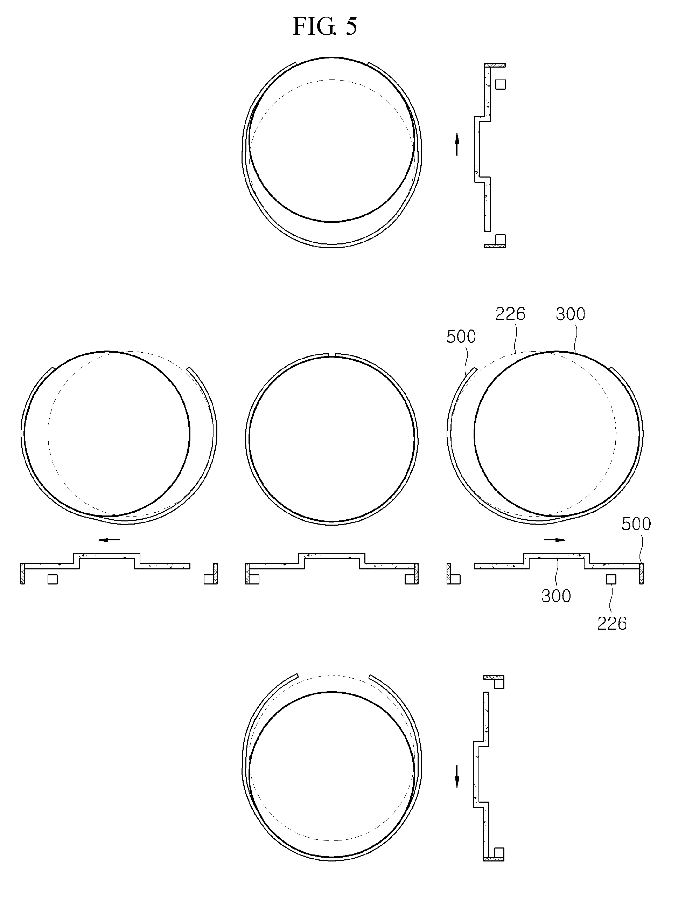

FIGS. 1 to 5 are views of a multi-direction input device in accordance with an exemplary embodiment. That is, FIG. 1 is a view illustrating an outer appearance of a multi-direction input device in accordance with an exemplary embodiment. FIG. 2 is an exploded perspective view of a multi-direction input device in accordance with an exemplary embodiment. FIG. 3 is a sectional view of a multi-direction input device in accordance with an exemplary embodiment. Here, FIG. 1A is a top view, FIG. 1B is a side view, and FIG. 1C is a bottom view. Also, FIG. 4 is a perspective view illustrating various shapes of a hinge part of a multi-direction input device in accordance with an exemplary embodiment. FIG. 5 is a schematic view for explaining states of a hinge part and a button part depending on an operation of a multi-direction input device in accordance with an exemplary embodiment.

Referring to FIGS. 1 to 3, a multi-direction input device in accordance with an exemplary embodiment includes a magnet part 400, a manipulation member 300 for moving the magnet part 400 through user's manipulation, a hinge part 500 for restoring the manipulation member 300, and a board 800 on which a sensor for detecting a change of a magnetic filed depending on movement of the magnet part 400 to generate a predetermined output signal is disposed. Also, the multi-direction input device may further include a fixing member for fixing at least one portion of the hinge part 500 when the manipulation member 300 is moved, a button part 100 for transmitting a force generated by the user's manipulation into the manipulation member 300, a case part 200 including upper and lower cases 210 and 220 for fixing the board 800 and the hinge part 500 to prevent the manipulation member 300 from being separated.

The button part 100 includes a plate 110 having an approximately circular shape with a predetermined thickness and a protrusion 120 having an approximately circular shape and disposed on an under surface of the plate 110. A predetermined pattern may be disposed on a top surface of the plate 110 to prevent a finger from slipping. Also, as shown in drawings, the button part 100 may have a width greater than that of the protrusion 120. Alternatively, the button part 100 may have the same width as that of the protrusion 120. A lower portion of the button part 100 may be coupled to the manipulation member 300. Thus, the manipulation member 300 may be moved by the user's manipulation through the button part 100. That is, a cap part 310 which protrudes from the other surface may be disposed on a central portion, and the protrusion 120 may surround the cap part 310 of the manipulation member 300. Here, an adhesion member 910 such as a double-sided tape may be disposed between a bottom surface of the plate 110 and the cap part 310 within the protrusion 120 to allow the button part 100 and the manipulation part 300 to fixedly adhere to each other. Here, the protrusion 120 and the cap part 310 may adhere to each other through various methods except the adhesion member 910. Alternatively, a groove or projection may be defined in a predetermined region of the inside of the protrusion 120 and a projection or groove may be disposed outside the cap part 310 to couple the projection and groove of the protrusion 120 to the groove and projection of the cap part 310. In addition, the protrusion 120 may have an inner diameter equal to an outer diameter of the cap part 310. Thus, the cap part 310 may be inserted into and fixed to the protrusion 120. An adhesion member may be disposed between the bottom surface of the protrusion 120 and a flat part 320 of the outside of the cap part 310 of the manipulation member 300 to allow the protrusion 120 and the cap part 310 to adhere to each other.

The case part 200 includes the upper and lower cases 210 and 220 which are coupled to each other. Thus, a predetermined space may be defined within the case part 200 to receive the manipulation member 300, the magnet part 400, the hinge part 500, and the board 800. An opening 212 having a predetermined size may be defined in a central portion of the upper case 210. Here, the upper case 210 may have a circular cylindrical shape with a bottom surface opened. That is, the upper case 210 includes an opening 212 having an approximately circular shape and defined in an upper portion thereof, a top surface 214 having a predetermined width to surround the opening 212, and a side surface 216 extending downward from the top surface 214. The side surface 216 of the upper case 210 may have a thickness corresponding to that of the multi-direction input device. That is, the manipulation member 300, the magnet part 400, the hinge part 500, and the board 800 may be received between the upper case 210 and the lower case 220. Since the upper case 210 should be manufactured at a thickness enough to receive the manipulation member 300, the magnet part 400, the hinge part 500, and the board 800, the upper case, i.e., the side surface 216 may be adjusted in thickness in consideration of thicknesses of the manipulation member 300, the magnet part 400, the hinge part 500, and the board 800.

The lower case 220 may have a plate shape having one area and the other area which have thicknesses different from each other. Also, the lower case may have a flat bottom surface. The lower case 220 includes a groove 222 having an approximately square shape and disposed at a central portion thereof a first plane 224 disposed around the groove 222 and having a first thickness, a protrusion 226 protruding from the outside of the first plane 224 at a predetermined height and having a predetermined width, and a second plane 228 disposed outside the protrusion 226 and having a second thickness greater than the first thickness. That is, a groove 222 is defined in a central portion of the lower case 220, and a protrusion 226 is disposed on a predetermined area of the lower case 220 so that it 226 is spaced from the groove 222 to surround the groove 222. The lower case 220 may have a thin plate shape which has an inner thickness less than an outer thickness with the protrusion 226 therebetween. The board 800 fixedly adheres to an inner plane of the lower case 220, i.e., the first plane through an adhesion member 930 such as the double-sided tape. Also, a control unit 810 disposed on a bottom surface of the board 800 is inserted into the groove 222 of the lower case 220. Thus, the groove 222 of the lower case 220 may be manufactured in a square shape as well as various shapes according to a shape of the control unit 810. The protrusion 226 may have an outer diameter equal to a diameter of the manipulation member 300. The hinge part 500 may surround the outsides of the manipulation member 300 and the protrusion 226. Thus, the protrusion 226 may serve as a fixing member for fixing at least one portion of the hinge part 500 when the manipulation member 300 is moved. That is, when the manipulation member 300 is moved in one direction, the hinge part 500 facing the manipulation member 300 is hung and fixed on the corresponding protrusion 226. Thus, the hinge part 500 of a direction in which the manipulation member 300 is moved is modified in shape. After user's manipulation is completed, the manipulation member 300 returns to its original position while the modified shape of the hinge part 500 returns to its original shape. The protrusion 226 may be integrated with the lower case 220. After the protrusion 226 is manufactured, the protrusion 226 may fixedly adhere to the second plane 228.

The upper and lower cases 210 and 220 may be coupled to each other by coupling the outside of the lower case 220 to the inside of the upper case 210. That is, an inner surface of a side surface 216 of the upper case 210 and an outer surface of the second plane 228 of the lower case 220 are coupled to each other. Here, the adhesion member (not shown) such as the double-sided tape is disposed between the inner surface of the side surface 216 of the upper case 210 and the outer surface of the second plane 228 of the lower case 220 to adhere to each other. In addition, the upper and lower cases 210 and 220 may be fixed to each other through various manners. For example, a groove or projection may be disposed on at least one area of the outer surface of the second plane 228 of the lower case 220 and a groove or projection may be disposed on at least one area of the side surface 216 of the upper case 210, thereby coupling the upper and lower cases 210 and 220 to each other. Also, an inner diameter of the side surface 216 of the upper case 210 and an outer diameter of the outer surface of the lower case 220 may accord with each other to fixedly insert the lower case 220 into the upper case 210. When the upper and lower cases 210 and 220 are coupled to each other, a predetermined space may be defined between the upper and lower cases 210 and 220, i.e., between the second plane 228 of the lower case 220 and the inside of the top surface 214 of the upper case 210. Accordingly, the manipulation member 300 and the hinge part 500 may be moved into the space.

The manipulation member 300 is disposed between the button part 100 and the magnet part 400 and is moved by the user's manipulation. The manipulation member 300 includes a cap part 310 in which a central portion thereof protrudes upward to define a predetermined space and a flat plate part 320 disposed around the cap part 310 and having an approximately circular shape. In the manipulation member 300, at least one portion of the magnet part 400 is received into the cap part 310. Also, as described above, the cap part 310 is coupled to the button part 100 through various manners. The manipulation member 300 moves the space between the upper and lower cases 210 and 220 by the user's manipulation. The cap part 310 may have a diameter less than that of the opening 212 of the upper case 210, and the flat plate part 320 of the manipulation member 300 may have a diameter less than an inner diameter of the upper case 210. That is, the movement and rotation of the manipulation member 300 may be limited by the hinge part 500. However, since the cap part 310 and the flat plate part 320 are moved into the opening 212 and the inner space of the upper case 210, the cap part 310 and the flat plate part 320 should have diameters less than those of the opening 212 and inner space of the upper case 210. Also, a ratio of the diameters of the cap part and the flat plate part 320 may be equal to that of the diameters of the opening 212 and the inner space of the upper case 210. Of cause, although the ratio of the diameters of the cap part 310 and the flat plate part 320 is different from that of the diameters of the opening 212 and the inner space of the upper case 210, the cap part 310 or the flat plate part 320 should not be limited in movement. The manipulation member 300 may be formed of a magnetic filed blocking material to prevent a magnetic filed of the magnet part 400 from spreading upward. Alternatively, the magnetic filed blocking material may be disposed on the inner surface of the cap part 310 of the manipulation member 300.

At least one portion of the magnet part 400 may be received into the cap part 310 of the manipulation member 300. A magnet which has a cylindrical shape and is vertically magnetized may be used as the magnet part 400. That is, the magnet part 400 may have a shape corresponding to that of the cap part 310 of the manipulation member 400. A portion of the magnet part 400 may be received into the cap part 310, and the other portion of the magnet part 400 may be exposed to a lower side of the cap part 310. Also, the magnet part 400 may have a diameter equal to an inner diameter of the cap part 310 to fix the magnet part 400 to the inside of the cap part 400. A single-surface multi-pole (e.g., two poles, four poles, or eight poles) magnetized or single-surface different-shape multi-poles magnetized magnet may be used as the magnet part 400. The magnet part 400 may have a square shape, an oval shape, or a polygonal shape. However, even though the magnet having various shapes is used, the magnet part 400 should have a diameter equal to an inner diameter of the cap part 310 of the manipulation member 300. The magnet part 400 may be moved together with the manipulation member 300 by the user's manipulation, and then the sensor disposed on the board may detect a variation of the magnetic field due to the movement of the magnet part 400 to detect a position of the magnet part 400. Also, a Teflon tape 920 and an actuator 600 may be disposed under the magnet part 400.

The hinge part 500 is disposed outside the manipulation member 300 to surround the flat plate part 320 of the manipulation member 300 and the outside of the protrusion 226. That is, the hinge part 500 may have a width to surround the manipulation member 300 and the protrusion 226 at the same time. For example, the hinge part 500 may have a width corresponding to a distance between the inside of the top surface 214 of the upper case 210 and the second plane 228 of the lower case 220. Also, the hinge part 500 may be manufactured by winding an elastic material such as metal, plastic, or rubber in a ring shape. The hinge part 500 may have a square shape, a circular shape, or a polygonal shape in section. For example, as shown in FIG. 4, a thin metal plate may be wound in a ring shape to manufacture the hinge part 500. Here, one end of the metal plate may contact the other end, one end of the metal plate may be spaced a predetermined distance from the other end, or one end and the other end of the metal plate may partially overlap each other to manufacture the hinge part 500. The hinge part 500 may be elastically wound to surround the outside of the manipulation member 300 and the outside of the protrusion 226 at the same time. The hinge part 500 may be pushed in the moving direction of the manipulation member 300 to extend, i.e., elastically deform the hinge part 500. Here, the hinge part 500 disposed on a side opposite to the moving direction of the manipulation member 300 may be hung and fixed on the protrusion 226. Thus, after the manipulation member 300 is moved, the manipulation member 300 may automatically return to its initial position by an elastic restoring force of the hinge part 500. The hinge part 500 may have an elastic stress which can limit the movement of the manipulation member 300 within a preset range. Thus, the manipulation member 300 may receive the magnet part 400 and be moved in left and right or up and down directions to automatically return to the initial position by the elastic restoring force of the hinge part 500.

The actuator 600 is disposed between the magnet part 400 and a dome switch 700. A Teflon tape 920 is disposed on the actuator 600. The Teflon tape 920 may cover the actuator 600 and the dome switch 700. The actuator 600 may provide a power of the user into the dome switch 700 when the user pushes the button part 100 to select a menu, i.e., performs a click operation. Thus, the dome switch electrically contacts the lower board 800. Also, the Teflon tape 920 adheres to the dome switch 700 with the actuator 600 therebetween to fix the actuator 600. The Teflon tape 920 may realize a smooth click operation to allow the user to feel a sense of manipulation. A wire pattern for applying a power or signal to the dome switch 700 and the actuator 600 is disposed on the lower board 800 contacting the actuator 600 and the dome switch 700. An upper portion of the actuator 600 may contact the magnet part 400, and a lower portion of the actuator 600 may contact the dome switch 700 through the Teflon tape 920.

The dome switch 700 is disposed on the board 800. The actuator 600 is disposed on the dome switch 700. The dome switch 700 has a dome shape which is spaced a predetermined distance from the board 800 at a central region of the board 800 and contacts the board 800 at an outer circumference region. The dome switch 700 generates an electrical signal for performing an operation selected according to a user's operation such as the click operation. That is, the dome switch 700 and the board 800 may contact each other to generate an electrical signal for performing the selected operation of the user. Here, various types of switches except the dome switch 700 may be used. For example, switches having a sense of click may be used. The dome switch 700 may be omitted as necessary.

The board includes a sensor for detecting a variation of the magnetic field due to the movement of the magnet part 400. Also, various circuit patterns are disposed on the board 800. A printed circuit board may be used as the board 800. The board 800 may be variously changed in shape according to electronics to which a multi-direction input device is applied. A control unit 810 may be disposed under the board 800. A plurality of sensors may be disposed within the control unit 810. That is, the plurality of sensors may be constituted by the control unit 810 and a single chip. Alternatively, the sensor may be disposed outside a top surface of the board 800 by being separated from the control unit 810. The sensor includes a magnetic sensor which detects a variation of a magnetic field due to the movement of the magnet part 400 in an X-axis direction to output an X-coordinate value and a magnetic sensor which detect a variation of a magnetic field due to the movement of the magnet part 400 in a Y-axis direction to output a Y-coordinate value. The control unit 810 may amplify and synthesize the outputs of the sensor to detect and output a variation of a final magnetic filed. Here, the plurality of sensor disposed in the control unit 810 may be symmetric to each other with respect to a central point of the magnet part 400. The sensor may include one of a hall element, a semiconductor magnetic reluctance element, a ferromagnetic magnetic reluctance element, and a giant magneto resistive element. That is, the sensor may include an element which is varied in electrical characteristic according to a variation of the magnetic field.

In the multi-direction input device in accordance with an embodiment, as shown in FIG. 5, the manipulation member 300 and the hinge part 500 are initially disposed at a central portion. Then, when the manipulation member 300 is moved in various directions, a portion of the hinge part 500 disposed at a side opposite to the moving direction of the manipulation member 300 is fixed to the protrusion 226. Also, the one end and the other end of the hinge part 500 are spaced from each other by the movement of the manipulation member 300. Thereafter, when the movement of the manipulation member 300 is stopped, the manipulation member 300 may return to its initial position due to the characteristic desired to maintain the original shape of the hinge part 500. That is, the manipulation member 300 may quickly return to the initial position by the elastic force of the hinge part 500.

In the above-described exemplary embodiment, although the hinge part 500 surrounds the outsides of the manipulation member 300 and the protrusion 226 serving as the fixing member, the manipulation member 300 and the hinge part 500 may be coupled to each other through various manners. For example, a fixing part 330 is disposed under the manipulation member 300, and the hinge part 500 is coupled to an inner surface of the fixing part 330. Another exemplary embodiment will be described with reference to FIGS. 5 to 9.

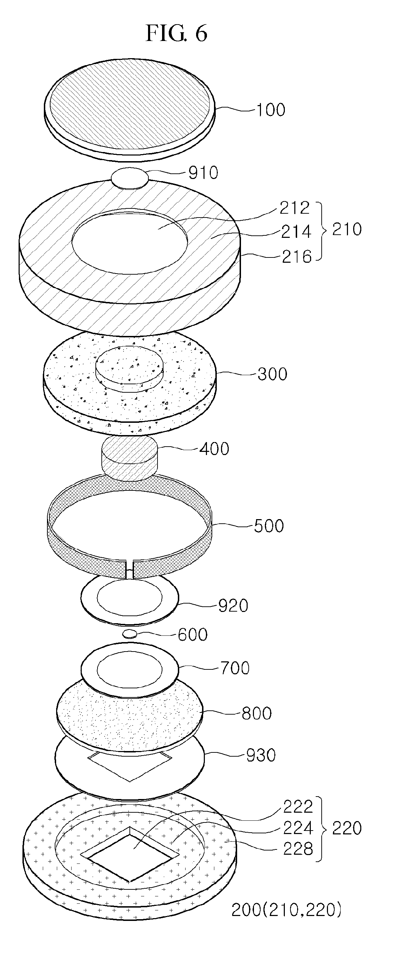

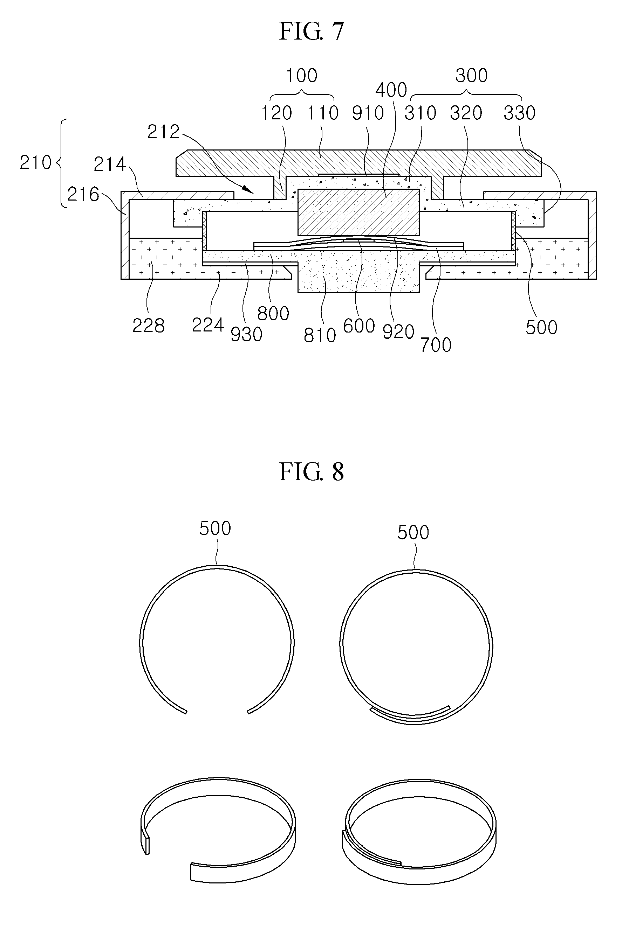

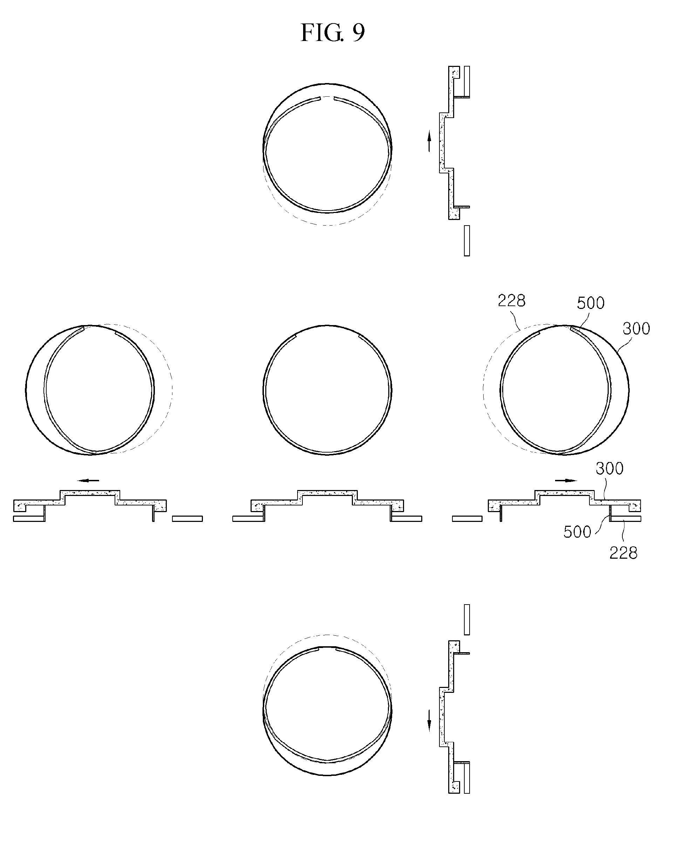

FIGS. 5 to 9 views of a multi-direction input device in accordance with another exemplary embodiment. That is, FIG. 6 is an exploded perspective view of a multi-direction input device in accordance with another exemplary embodiment, and FIG. 7 is a sectional view of a multi-direction input device in accordance with another exemplary embodiment. FIG. 8 is a perspective view illustrating various shapes of a hinge part of a multi-direction input device in accordance with another exemplary embodiment, and FIG. 9 is a schematic view for explaining states of a hinge part and a button part depending on an operation of a multi-direction input device in accordance with another exemplary embodiment. In description according to another exemplary embodiment, descriptions duplicated with those of the foregoing embodiment will be omitted, and thus different points will be mainly described.

Referring to FIGS. 6 and 7, the multi-direction input device in accordance with another exemplary embodiment includes a magnet part 400, a manipulation member 300 including a cap part 310, a flat plate part 320, and a hinge fixing part 330 and receiving the magnet part 400 therein to move the magnet part 400 through user's manipulation, a hinge part 500 disposed inside the hinge fixing part 330 of the manipulation member 300 to restore the manipulation member 300, and a board 800 on which a sensor which detects a variation of a magnetic field due to the movement of the magnet part 400 to generate a predetermined outer signal is disposed. In the multi-direction input device in accordance with another exemplary embodiment, the manipulation member 300 and the hinge part 500 may be mainly described.

The manipulation member 300 is disposed between a button part 100 and the magnet part 400 and moved by the user's manipulation. The manipulation member 300 includes the cap part in which a central portion thereof protrudes upward to define a predetermined space therein to receive the magnet part 400, the flat plate part 320 disposed around the cap part 310 and having an approximately circular shape, and the hinge fixing part 330 extending downward from the outside of the flat plate part 320. The hinge part 500 is disposed on an inner surface of the hinge fixing part 330 to transmit a force of the hinge part 500 when the manipulation member 300 is moved, thereby changing a shape of the hinge part 500. That is, the hinge part 500 is disposed outside the manipulation member 300 in the foregoing embodiment. However, in another exemplary embodiment, the hinge fixing part 330 may be disposed under the manipulation member 300, and thus the hinge part 500 may be disposed inside the manipulation member 300.

The hinge part 500 is disposed under the manipulation member 300 to contact the inside of a hinge receiving part 330 of the manipulation member 300. The hinge part 500 may be manufactured by winding an elastic material such as metal, plastic, or rubber in a ring shape. For example, as shown in FIG. 8, a thin metal plate may be wound in a ring shape to manufacture the hinge part 500. Here, one end of the metal plate may be spaced a predetermined distance from the other end or one end and the other end of the metal plate may partially overlap each other to manufacture the hinge part 500. The hinge part 500 may be elastically wound to contact an inner surface of the hinge fixing part 330 of the manipulation member 300. Thus, the manipulation member 300 may be moved to elastically deform the hinge part 500. That is, as shown in FIG. 9, the manipulation member 300 and the hinge part 500 may be maintained in shape similar to its original shape at an initial position of the multi-direction input device, i.e., a central portion. However, as the manipulation member 300 is moved, one region of the hinge part 500 may be contracted to deform the shape of the hinge part 500. Here, the hinge fixing part 330 disposed at a side opposite to the moving direction of the manipulation member 300 and the hinge pat 500 may contact each other to deform the hinge part 500. That is, the shape of the hinge part 500 may be changed in a direction in which the manipulation member 300 is moved. Sequentially, after the manipulation is completed, the manipulation member 300 may automatically return to its initial position by an elastic restoring force of the hinge part 500. The hinge part 500 may have an elastic stress which can limit the movement of the manipulation member 300 within a preset range. Thus, the manipulation member 300 may receive the magnet part 400 and be moved in a multi-direction such as left and right or up and down directions to automatically return to the initial position by the elastic restoring force of the hinge part 500.

Also, since the hinge fixing part 330 is disposed under the manipulation member 300, the lower case 220 may be changed in structure. That is, as shown in FIGS. 6 and 7, the lower case 220 includes a groove 222 defined in a central portion and having an approximately square shape, a first plane 224 disposed around the groove 222 and having a first thickness, and a second plane 228 disposed outside the first plane 224 and having a second thickness greater than the first thickness. Here, an area between the first plane 224 and the second plane 228, i.e., an inner surface of the second plane 228 may contact a portion of the hinge part 500 to serve as a fixing member for fixing a portion of the hinge part 500 when the manipulation member 300 is moved. In this case, the second plane 228 may have an inner diameter equal to that of the fixing part 330 of the manipulation member 300. Alternatively, similar to the foregoing embodiment, a protrusion 226 may be disposed to fix the hinge part 500 so that the hinge part 500 contacts the inside of the protrusion 226.

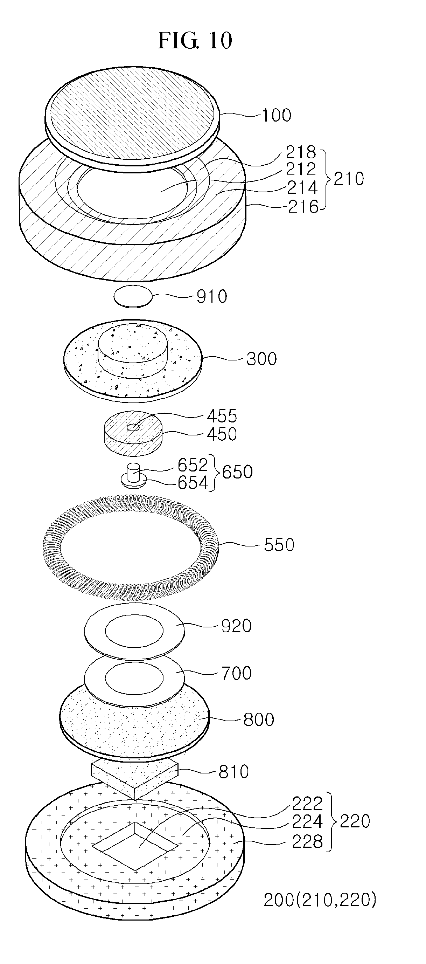

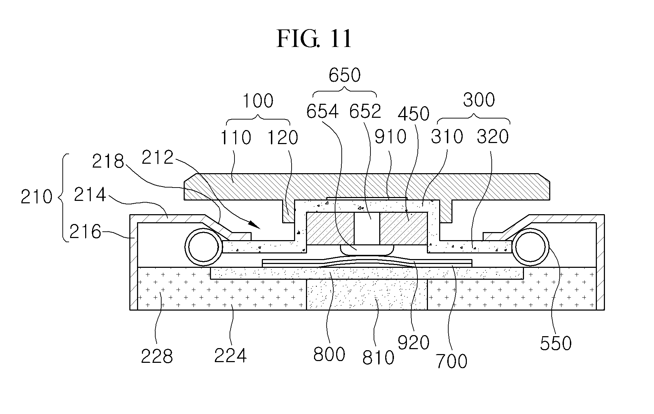

FIGS. 10 and 11 are perspective and sectional views of a multi-direction input device in accordance with another exemplary embodiment. A multi-direction input device in accordance with another exemplary embodiment will be described below. In description according to another exemplary embodiment, descriptions duplicated with those of the foregoing embodiments will be omitted, and thus different points will be mainly described.

Referring to FIGS. 10 and 11, a multi-direction input device in accordance with another exemplary embodiment includes a magnet 450 having a through hole 455 which vertically passes, a manipulation member 300 moving the magnet part 450 through user's manipulation, a hinge part 660 manufactured in a ring shape using a metal spring or rubber spring to restore the manipulation member 300, and a board 800 including a sensor which detects a variation of a magnetic field due to the movement of the magnet part 450 to generate a predetermined output signal. In addition, the multi-direction input device further includes a button part 100 transmitting a force generated by the user's manipulation to the manipulation member 300 and a case part 200 including upper and lower cases 210 and 220 which fix the board 800 and hinge part 550 to prevent the manipulation member 300 from being separated.

The upper case 210 has an opening 212 having a predetermined size at a central portion thereof. Also, the upper case 210 may be manufactured in a cylindrical shape in which a bottom surface thereof is removed. That is, the upper case 210 has an upper opening 212 having an approximately circular shape, a top surface spaced from the opening 212 and having a predetermined width to surround the opening 212, and a side surface 216 extending downward from the top surface 214. Also, the upper case 210 further have an inclined part 218 disposed between the opening 212 and the top surface 214 and inclined at a predetermined angle. Here, the outside of the inclined part 218 may be surrounded by the hinge part 550 having a ring shape to fix a portion of the hinge part 550 when the manipulation member 300 is moved. Thus, the inclined part 218 may serve as a fixing member. That is, when the manipulation member 300 is moved in one direction, a portion of the hinge part 550 disposed on a side opposite to the moving direction is hung on the inclined part 218. Also, a portion of the hinge part 550 disposed on a side equal to the moving direction of the manipulation member 300 may be elastically extended. The inclined part 218 should have a diameter equal to that of at least the manipulation member 300. A protrusion protruding from one area of the opening except the inclined part 218 may be provided to fix a portion of the hinge part 550.

The manipulation member 300 is disposed between the button part 100 and the magnet part 450 and moved by the user's manipulation. The manipulation member 300 includes a cap part 310 which protrudes upward at a central portion of the manipulation member 300 to provide a predetermined space, thereby receiving the magnet part 450 and a flat plate part 320 disposed around the cap part 310 and having an approximately circular shape.

The magnet part 450 is received into the cap part 310 of the manipulation member 300. A magnet which has a plate shape and predetermined thickness and is vertically magnetized may be used as the magnet part 450. That is, the magnet part 450 may have a shape corresponding to that of the cap part 310 of the manipulation member 300. Also, the magnet part 450 may have a diameter equal to an inner diameter of the cap part 310 to fix the magnet part 450 within the cap part 400. Also, the magnet part 450 in accordance with another exemplary embodiment, for example, may have a through-hole 455 which vertically passes in a central portion thereof. An actuator 650 may be inserted and coupled to the inside of the through-hole 455. The actuator 650 may have a structure including a protrusion 652 and a flat plate part 654 to allow a portion of the actuator 650 to be inserted into the magnet part 450 through the through-hole 455. That is, the protrusion 652 may be disposed so that it 652 has a shape corresponding to that of the through-hole of the magnet part 450, i.e., a diameter equal to an inner diameter of the through-hole 455 and a length corresponding to that of the through-hole 455. The flat plate part 654 having a width greater than that of the protrusion 652 may be disposed on one end of the protrusion 652. The magnet part 450 may be moved together with the manipulation member by the user's manipulation. Also, the magnet part 450 may detect a variation of a magnetic field due to the movement of the magnet part 400 to detect a position of the magnet part 400.

The hinge part 550 is disposed outside the manipulation member 300. Also, the hinge part 550 is disposed to surround the flat plate part 320 of the manipulation member 300 and an inner surface of the inclined part 218 of the upper case 210 at the same time. The hinge part 550 may be manufactured in a ring shape using a metal spring or a rubber spring. That is, the hinge part 550 winds the metal spring or rubber spring in a ring shape to couple one end thereof to the other end. Then, the hinge part 550 may surround the outside of the manipulation member 300 and the inside of the inclined part 218. The hinge part 550 may be elastically wound to surround the outside of the manipulation member 300 and the inside of the inclined part 218. Also, the hinge part 550 may be pushed in the moving direction of the manipulation member 300 to extend, i.e., elastically deform the hinge part 550. Thus, after the manipulation member 300 is moved, the manipulation member 300 may automatically return to its initial position by an elastic restoring force of the hinge part 550. Also, the hinge part 550 may have an elastic stress which can limit the movement of the manipulation member 300 within a preset range. Thus, the manipulation member 300 may receive the magnet part 450 and be moved in left and right or up and down directions to automatically return to the initial position by the elastic restoring force of the hinge part 550.

The first plane 224 within the lower case 220 may have a thickness corresponding to that of a control unit 810 to receive the control unit 810 into a groove 222 of the lower case 220. That is, although the control unit 810 is exposed to a lower side of the lower case through the groove 222 of the lower case 220 in the foregoing embodiments, the control unit 810 in accordance with the current embodiment may not be exposed to the outside so that it 810 is disposed within the groove 222 of the lower case 220.

In the above-described embodiments, the elastic material such as a metal, plastic, or rubber, e.g., a thin metal plate, a metal spring, or a rubber spring may be wound in a ring shape to manufacture the hinge parts 500 and 550. Then, the hinge parts 500 and 550 may disposed to surround the outside of the manipulation member 300 and at least one portion of the fixing member disposed on one area of the upper and lower case 210 or 220 or the manipulation member 300. When the manipulation member 300 is moved in one direction, a portion of the hinge part 500 or 550 disposed on a side opposite to the moving direction may be fixed to the fixing member. Thus, the hinge parts 500 and 550 may quickly return to the original positions after being elastically deformed.

The multi-direction input device in accordance with the exemplary embodiments may be applied to various electronic devices including a portable terminal. That is, the multi-direction input device may be applied to a mobile phone as well as various types of electronic devices such as a digital camera, a camcorder, an MP3 player, a PMP, a PDA, a GPS, a laptop computer, an electronic game machine, a remote controller, and an electronic dictionary. Such an electronic device includes a screen display unit for displaying an image. A point or cursor is displayed on the screen display unit. In the electronic device, the point or cursor on the screen display unit may be moved along an input signal applied through an input device. A multi-direction input device may be used as the input device. That is, a sensor output (a coordinate signal) of the multi-direction input device may be applied to a control unit, and then, the point or cursor on the screen display unit may be moved by the control unit.

However, the multi-direction input device capable of being used for the electronic devices is not limited to the above-described structure. For example, various sensors for moving the cursor on the screen and various devices for driving the sensors may be further added. For example, the movement of the manipulation member may be detected using an optical sensor to move the cursor on the screen.

In accordance with the exemplary embodiments, the elastic material such as metal, plastic, or rubber may be wound in a ring shape to manufacture the hinge part. The hinge part may surround the outer circumference of the manipulation member in which at least one portion of the magnet part is received. Simultaneously, the hinge part may surround the fixing member disposed on at least one portion of the upper or lower case or the manipulation member.

Thus, when the manipulation member is moved in one direction, a portion of the hinge part disposed on a side opposite to the moving direction of the manipulation member may be fixed to allow the manipulation member to quickly return to its original position after the hinge part is elastically deformed in the moving direction of the manipulation member.

Also, the hinge part may not contact the board to prevent the hinge part from being damaged. Thus, the elasticity of the hinge art may not be lost.

Also, the actuator may be disposed under the magnet part to provide the sense of manipulation depending on the click operation of the user.

Although the multi-direction input device has been described with reference to the specific embodiments, it is not limited thereto. Therefore, it will be readily understood by those skilled in the art that various modifications and changes can be made thereto without departing from the spirit and scope of the present invention defined by the appended claims.

## Claims

1. A multi-direction input device comprising:
a manipulation member moved in a multi-direction by a user's manipulation;
a hinge part disposed to surround at least one side of the manipulation member, the hinge part returning to an initial position of the manipulation member by elasticity; and
a fixing member configured to fix at least one portion of the hinge part.

2. The multi-direction input device of claim 1, wherein the hinge part is disposed to surround the outside of a lateral direction of the manipulation member and the outside of the fixing member at the same time.

3. The multi-direction input device of claim 1 or 2, further comprising a case part comprising upper and lower cases which are coupled to each other to receive the hinge part and the manipulation member.

4. The multi-direction input device of claims 1 to 3, wherein the fixing member comprises a protrusion protruding upward from one area of the lower case.

5. The multi-direction input device of claims 1 to 4, wherein the hinge part is disposed to surround the inside of a lower side of the manipulation member and the inside of the fixing member at the same time.

6. The multi-direction input device of claims 1 to 5, wherein the manipulation member comprises:
a flat plate part having a flat plate shape; and
a hinge fixing part extending downward from the outside of the flat plate part.

7. The multi-direction input device of claims 1 to 6, wherein the fixing member comprises a protrusion protruding upward from one area of the lower case or a stepped portion between one plane and the other plane which have thicknesses different from each other.

8. The multi-direction input device of claims 1 to 7, wherein the hinge part is disposed to surround the inside of the hinge fixing part and the inside of the protrusion or the stepped portion at the same time.

9. The multi-direction input device of claims 1 to 8, wherein the hinge part is disposed to surround the outside of a lateral direction of the fixing member and the inside of the fixing member at the same time.

10. The multi-direction input device of claims 1 to 9, further comprising a case part comprising upper and lower cases which are coupled to each other to receive the hinge part and the manipulation member,
wherein the fixing member comprises an inclined part inclined from a top surface of the upper case toward a lower side of a central portion or a protrusion disposed between the top surface and the central portion.

11. The multi-direction input device of claims 1 to 10, wherein the hinge part is disposed to surround an inner surface of the inclined part and the outside of the manipulation member at the same time.

12. The multi-direction input device of claims 1 to 11, wherein the hinge part is manufactured by winding an elastic metal, plastic, or rubber in a ring shape.

13. The multi-direction input device of claims 1 to 12, wherein the hinge part is manufactured in a ring shape so that one end and the other end thereof contact each other, are spaced a predetermined distance from each other, or partially overlap each other.

14. The multi-direction input device of claims 1 to 13, further comprising:
a magnet part in which at least one portion thereof is received into the manipulation, the magnet being moved together with the manipulation member; and
a sensor configured to detect a variation of a magnetic field of the movement of the magnet part.

15. The multi-direction input device of claims 1 to 14, wherein the manipulation member comprises:
a cap part configured to receive at least one portion of the magnet part; and
a flat plate part disposed around the cap part, the flat plate part having a flat plate shape.

16. The multi-direction input device of claims 1 to 15, further comprising an actuator disposed under the magnet part.
